(19) **Europäisches Patentamt**
**European Patent Office**
**Office européen des brevets**

(11) **EP 2 589 983 A1**

(12) **EUROPEAN PATENT APPLICATION**

(43) Date of publication:
**08.05.2013 Bulletin 2013/19**

(51) Int Cl.:
**G01S 19/21** (2010.01)      **G01S 19/36** (2010.01)

(21) Application number: **11188083.7**

(22) Date of filing: **07.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The European Union, represented by the European Commission 1049 Brussels (BE)**

(72) Inventors:
• **Borio, Daniele**
  **10093 Collegno (TO) (IT)**
• **Fortuny-Guasch, Joaquim**
  **21020 Taino (IT)**

(74) Representative: **Office Freylinger**
  **P.O. Box 48**
  **8001 Strassen (LU)**

(54) **GNSS receiver with a plurality of antennas**

(57)      A GNSS receiver comprises at least two antennas for receiving a GNSS signal at different positions. A multiplexer switch is connected to the antennas and controlled by a control signal generator in such a way as to cyclically select the signals produced by the antennas one at a time and to multiplex samples of the signals produced by the antennas in a time-multiplexed signal. A front end is connected to the switch for receiving the time-multiplexed signal. The switch switches from one signal produced by the antennas to the next at a switching frequency of at least m · 2 MHz, where m is the number of antennas. The front end converts the time-multiplexed signal into a digital stream with interleaved samples from the different antennas. A DSP connected to the front end de-interleaves the digital stream and processes the samples from the different antennas as antenna-specific streams.

**Fig. 1**

EP 2 589 983 A1

## Description

### Technical field

The present invention generally relates to a Global Navigation Satellite System (GNSS) receiver equipped with an antenna array. The GNSS receiver may use the differential phase(s) between the signals from the two or more antennas of the antenna array for null-steering and beamforming, estimating the direction of arrival of interfering signals and counterfeited GNSS signals as wells the detection of spoofing attacks.

### Background Art

It has been known for some time that multiple-antenna GNSS receivers can autonomously detect spoofing attacks using the carrier phase difference between the different antennas. See for reference e.g. the paper "A Multi-Antenna Defense - Receiver-Autonomous GPS Spoofing Detection", by P. Y. Montgomery et al. Inside GNSS, March/April 2009, pp. 40-46.

The paper "A GNSS software receiver beamforming architecture", by M. Li, et al., International Symposium on GPS/GNSS, Tokyo, Japan, 25-28. November 2008, 904-909) describes digital beamforming to be an effective way to improve gain in the direction of a transmitting GNSS satellite, and to null in the direction of undesired signals such as interference and multipath. The paper describes, in particular, a method of simplifying the architecture of multi-antenna GNSS receivers.

US 5,268,695 relates to a GNSS receiver comprising a plurality of antennas. The carrier signal received by the antennas is time-multiplexed through a single hardware path using a single receiver's oscillator in that hardware path so as to compare the carrier phase from each antenna. Each comparison results in a phase angle measurement for the respective antennas compared to a master antenna (which is an arbitrary one of the antennas). Each phase angle may be used to determine the angle between the propagation vector and the baseline between the pair of antennas concerned.

### Technical problem

It is an object of the present invention to provide simpler receiver architecture for a multiple-antenna GNSS receiver. This object is achieved by a GNSS receiver as claimed in claim 1.

### General Description of the Invention

A GNSS receiver comprises an antenna array including at least two antennas for receiving a GNSS signal at different positions and for producing respective signals having relative phases that depend on the direction of arrival of the GNSS signal. A multiplexer switch is connected to the antennas and controlled by a control signal provided by a control signal generator connected to the multiplexer switch. The multiplexer switch is controlled in such a way as to cyclically select the signals produced by the antennas one at a time and to multiplex samples of the signals produced by the antennas in a time-multiplexed signal. A front end (an RF front end or an IF front end) is connected to the multiplexer switch for receiving the time-multiplexed signal. According to the invention, the multiplexer switch is configured for switching from one signal produced by the antennas to the next at a switching frequency amounting to at least $m \cdot 2$ MHz, where m is the number of antennas of the antenna array. The $m \cdot 2$ MHz switching frequency has been calculated for the GPS L1 C/A signals. Other signals may require more high-frequent switching. The front end is furthermore configured so as to convert the time-multiplexed signal into a digital stream with interleaved samples from the different antennas. A digital signal processor (DSP) is connected to the front end so as to receive the digital stream as an input. The DSP is configured to de-interleave the digital stream and to process the samples from the different antennas as antenna-specific streams. The front end is preferably configured to carry out I/Q sampling. If the front end is configured for carrying out real sampling, the switching frequency preferably amounts to at least $m \cdot 4$ MHz. An explanation of I/Q sampling and real sampling can be found in "Fundamentals of Global Positioning System Receivers: A Software Approach" (Wiley Series in Microwave and Optical Engineering), James Bao-yen Tsui, Wiley-Interscience 2nd edition (December 3, 2004), incorporated herein by reference. As used herein, the term "front end" designates a device responsible of providing digital base-band samples from an RF or IF analog signal. It is the interface between analog and digital words. The front-end may comprise several components, including a down-converter and a digitizer. Down-conversion can be performed at several stages. For example from RF to IF and then from IF to baseband.

It shall be noted that in US 5,268,695, switching between different antennas is performed at a low rate (1 kHz) and several milliseconds of data are collected consecutively from the same antenna. At the DSP side, also de-multiplexing is carried out at the 1 kHz rate and data losses are unavoidable at each antenna transition. More specifically, in any GNSS receiver de-spreading is a fundamental operation and consecutive data blocks are necessary for computing a de-spread symbol. In US 5,268,695, antenna switching causes the occurrence of data blocks containing samples from two different antennas. These data cannot be used for de-spreading and have to be discarded. In the current invention de-multiplexing at the DSP side is an operation occurring at the high sampling rate (at least in the MHz range). This avoids data losses and the availability of samples collected at consecutive time instants from different antennas.

According to a first preferred embodiment of the invention, the antennas are directly connected to the multiplexer switch, which is in this case an RF switch.

According to a second preferred embodiment of the invention, the antennas are connected to the multiplexer switch via a respective down-converter, each down-converter being configured for transposing the signals produced by the antennas to an intermediate frequency (IF). In this case, the multiplexer switch is an IF switch.

Preferably, the DSP is configured for carrying out pre-correlation null-steering. The availability of signal samples from different antennas allows one to adapt the antenna beam shape and nullify signals from a specific direction. This process, usually denoted as null steering can be implemented even when a single front-end is adopted. This type of processing is adapted here to the case of GNSS signals. The availability of signals from different directions also allows the estimation of the direction of arrival of interference sources and counterfeited signals.

The digital signal processor is preferably configured for carrying out pre-correlation null-steering by minimizing the energy of a composite signal defined by the formula:

$$y[n] = \sum_{i=1}^{m} w_i^* x_i[n] \qquad (1)$$

where

n is the sample number,

m is the number of antennas of the antenna array

y[n] is the composite waveform for the n-th sample n,

$x_i[n]$, i=1... m, are the n-th samples from antennas i...m, respectively, and

$w_i$, i=1...m, is are complex weights, calculated (under a constraint that excludes trivial solutions like $w_i = 0$, i=1,...,m) in such a way that the energy of the composite signal is minimised. (The asterisk denotes the complex conjugate.)

The digital signal processor is advantageously configured to derive a direction of arrival of an interfering signal from the complex weights and the geometrical configuration of the antenna array.

The digital signal processor may further be configured to separately correlate antenna-specific streams with a local code replica and a local carrier replica and to detect a GNSS spoofing signal based upon the correlation results thereby obtained.

A spoofing attack is a situation where someone intentionally counterfeits GNSS signals with the objective of fooling a GNSS receiver. (See for reference H. Wen, P. Y.-R. Huan, J. Dyer, A. Archinal, and J. Fagan, "Countermeasures for gps signal spoofing," in Proc. of the ION GNSS'05, Long Beach, CA, September 2005, pp. 1285-1290.) Spoofing attacks are detected by exploiting signal signatures that can be hardly counterfeited. In this respect, the spatial signature of a GNSS signal, which a multi-antenna system can identify, can be hardly counterfeited. Several works have considered multi-antenna systems for spoofing detection purposes. See e.g. US 5,557,284; P. Y. Montgomery, T. E. Humphreys, and B. M. Ledvina, "Receiver-autonomous spoofing detection: Experimental results of a multi-antenna receiver defense against a portable civil GPS spoofer," in Proc. of ION ITM, Anaheim, CA, January 2009, pp. 124-130; P. Y. Montgomery, T. E. Humphreys, and B. M. Ledvina, "A multi-antenna defense. receiver-autonomous gps spoofing detection," Inside GNSS, vol. 4, no. 2, pp. 40-46, March/April 2009; and B. Motella, M. Pini, M., Fantino, P. Mulassano, M. Nicola, J. Fortuny-Guasch, M. Wildemeersch, and D. Symeonidis, "Performance assessment of low cost GPS receivers under civilian spoofing attacks," in Proc. of the 5th ESA Workshop on Satellite Navigation Technologies and European Workshop on GNSS Signals and Signal Processing (NAVITEC), Dec. 2010, pp. 1 -8. In all the mentioned works, the phase difference between signals from different antennas is monitored. When signals are generated by a spoofer, they likely come from the same source and thus are characterized by the same phase difference. The proposed systems however require a number of front-ends equal to the number of receiving antennas and the potential of switch antenna systems has not been considered.

**Brief Description of the Drawings**

Preferred embodiments of the invention will now be described, by way of example, with reference to the accompanying drawings in which:

Fig. 1 is a schematic view of a GNSS receiver according to a first preferred embodiment of the invention;

Fig. 2 is a schematic view of a GNSS receiver according to a second preferred embodiment of the invention;

Fig. 3 is a schematic view of a preferred null-steering architecture (spatial notch filter);

Fig. 4 is an illustration of the effect of a spatial notch filter;

Fig. 5 is a schematic view of a preferred spoofing detection architecture.

**Description of Preferred Embodiments**

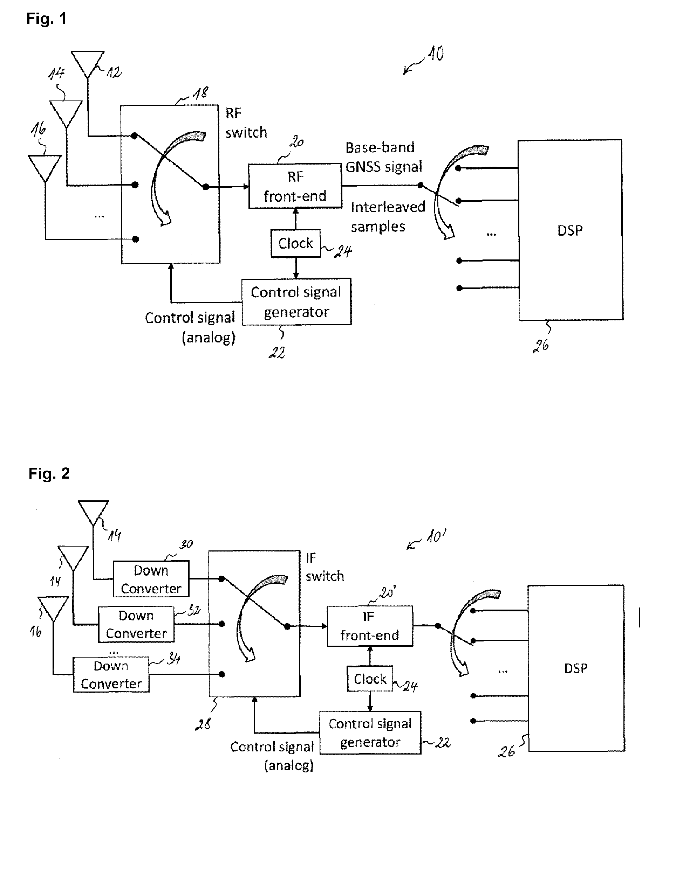

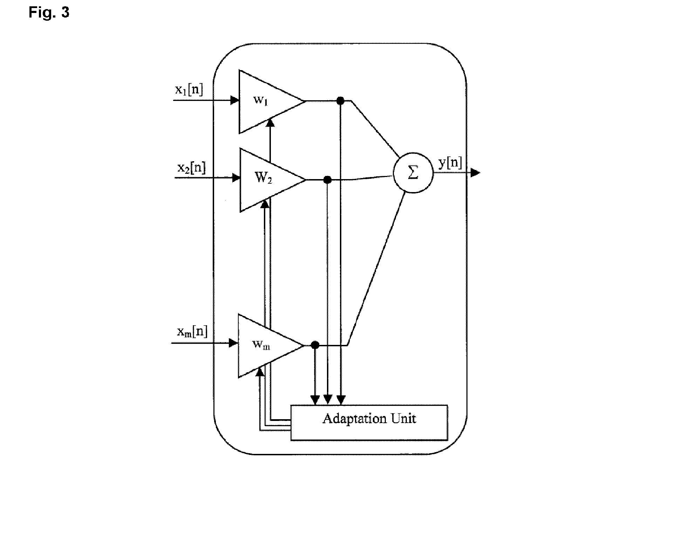

As illustrated in Fig. 1, a GNSS receiver 10 according to a first preferred embodiment of the invention comprises a plurality of antennas 12, 14, 16 operating in the GNSS band (i.e. preferably in the range from 1164 MHz (lower bound of L5 band) - 1597 MHz (upper bound of L1 band)). The antennas 12, 14, 16 are connected to a multiplexer switch. The multiplexer switch is implemented as an RF switch 18 that periodically selects a signal from a different antenna. An example of RF switch able to operate in the GNSS bands is switch ZSWA-4-30DR from MiniCircuits. This type of switch has a commuting time of the order of few tens of nanoseconds that can be considered negligible with respect to the sampling intervals adopted for GNSS applications. The switching is synchronous with the sampling frequency of the front-end 20 that produces a digital stream with interleaved I/Q samples from the different antennas. The switching is controlled by a control signal generator 22, which is itself synchronized with the front end 20 by a common clock 24. The switching frequency amounts to at least m · 2 MHz, where m is the number of antennas of the antenna array. The sampling frequency also equals m · 2 MHz. The RF front end 20 produces a digital stream with interleaved I/Q samples from the different antennas 12, 14, 16. The digital stream is input to DSP 26, which carries out the further treatment (acquisition, tracking, code phase retrieval, etc.) As is schematically indicated in Fig. 1, the DSP 26 is configured to de-interleave the digital stream and to process the samples from the different antennas as antenna-specific streams. The de-interleaving operation is preferably carried out by a software executed by the DSP.
Due to the switching, the samples from the different antennas are slightly out of phase with one another. The phase difference is taken into account by the DSP 26.
The RF switch operates directly at RF, so that a single down-conversion stage may be used. The down-conversion stage (RF to baseband) is implemented in the RF front end 20.
Fig. 2 is an illustration of a second embodiment of a GNSS receiver according to the invention. In this embodiment, the multiplexer switch is implemented as an IF switch 28. Each one of the antennas 12, 14, 16 is connected to a respective down-converter 30, 32, 34, which transposes the RF signals received by the antenna to an intermediate frequency. Consequently, the RF front end of Fig. 1 is replaced by an IF front end 20'. Although each input signal requires its own down-conversion scheme, the second embodiment relaxes the requirements on the multiplexer switch. In all other respects, the GNSS receiver 10' of Fig. 2 is similar to the one of Fig. 1.
In both embodiments, the switch control signal is not subject to any control by the DSP 26. More specifically, in terms of frequency and synchronization, the processing carried out by the DSP 26 is adapted to the switch control signal. The switch control signal is obtained from the front-end clock and makes the switch select a different antenna each sampling interval. Some processing strategies that may be adopted by the DSP unit are detailed hereinafter.
Null-Steering may be achieved by implementation of a spatial notch filter. In this case, the samples from the different antenna-specific streams provided by the switch antenna system are combined as in Fig. 3. Since GNSS signals are buried in noise, a directional interference can be removed by constructing the composite signal

$$y[n] = \sum_{i=1}^{m} w_i^* x_i[n] \qquad (1)$$

where
n is the sample number,
m is the number of antennas of the antenna array
y[n] is the composite waveform for the n-th sample n,
$x_i[n]$, i=1... m, are the n-th samples from antennas i...m, respectively, ([..., $x_i[n-1]$, $x_i[n]$, $x_i[n+1]$, ... ] are the antenna-specific sample streams) and
$w_i$, i=1... m, is are complex weights.

The complex weights $w_i$, i...m, are progressively adapted for removing the directional interference. The complex weights $w_i$, i... m, are preferably updated by an adaptation unit from sample to sample (one may write $w_i[n]$ instead of $w_i$ in order to clarify that they are changing parameters) by optimizing a cost function. The $w_i$, i... m, can e.g. be updated by minimizing the energy of the output signal $y[n]$, i.e. the expectation value E of the squared modulus of $y[n]$: $E[|y[n]|^2]$. The energy can be minimized using a Least Mean Squares (LMS) filter approach that leads to the following update equation for $w_i[n]$:

$$w_i[n] = w_i[n-1] - \mu\, y[n-1] x_i^*[n] \qquad (2)$$

where $\mu$ is the adaptation step and $x_i[n]$ is the signal from the ith data stream. Eq. (2) is obtained by computing the stochastic gradient of the cost function

$$|y[n]|^2 \qquad (3)$$

with respect to the weight, $w_i$.

When considering all the weights, Eq. (2) can be written in vectorial form

$$\mathbf{w}_i[n] = \begin{bmatrix} w_1[n] \\ w_2[n] \\ \vdots \\ w_m[n] \end{bmatrix} = \mathbf{w}_i[n-1] - \mu\, y[n-1] \cdot \begin{bmatrix} x_1^*[n] \\ x_2^*[n] \\ \vdots \\ x_m^*[n] \end{bmatrix}. \qquad (4)$$

In order to avoid the convergence of $w_i[n]$ to trivial solutions, i.e., $w_i[n] = 0$, it is necessary to impose a constraint on the weights, e.g. $w_i[n] = 1$.

When adopting this constraint, than there is no need to apply update equation (2) to the first weight: only the weights for i=2,...,m are obtained and $w_1$ is kept constant. This constraint impacts the computation of $y[n]$:

$$y[n] = x_1[n] + \sum_{i=2}^{m} w_i[n]^* x_i[n] \qquad (5)$$

and thus of the update Eq. (2) that uses $y[n-1]$.

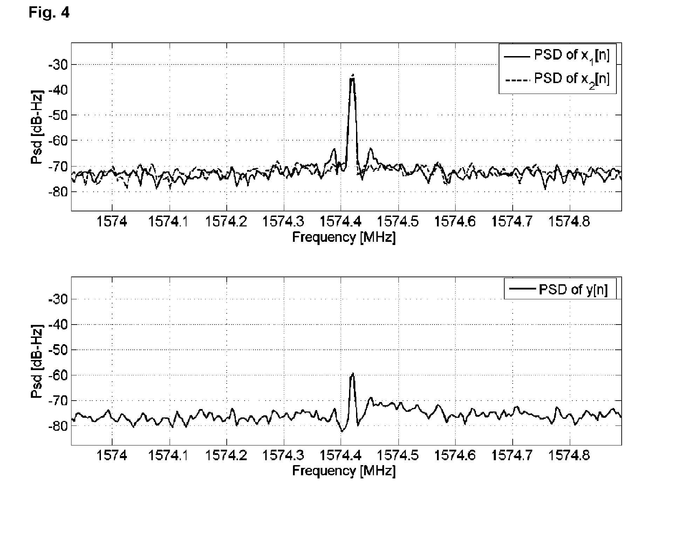

Samples results (with m=2) illustrating the effect of the spatial notch filter described above are shown in Fig. 4. The Power Spectral Density (PSD) of the two data stream provided by the switch antenna system are shown in the upper part of Fig. 4. In both PSDs, it is possible to observe a strong Continuous Wave (CW) interference that is removed by the proposed spatial notch filter. The effect of the spatial notch filter is shown in the bottom part of Fig. 4, where the PSD of the output signal is provided. In this case, the interfering signal is attenuated by approximately 25 dB.

It is worthwhile noting that the null-steering algorithm described hereinabove is "blind" in the sense that it does not need any information about the geometrical arrangement of the antenna array and it is insensitive to the delays between the signals introduced by the multiplexer switch. In addition to this, the algorithm is of pre-correlation type, i.e., the weight computation is carried out before the input streams are correlated with the GNSS signal replicas (i.e. code, carrier and, possibly, subcarrier replicas). As an alternative or a complement, the post-correlation beamforming algorithm described in M. Li, F. Wang, A. T. Balaei, A. Dempster, and C. Rizos, "A GNSS software receiver beamforming architecture," in Proc. of International Symposium on GPS/GNSS, Tokyo, Japan, November 2008, pp. 904-909 could be used by a receiver according to the invention.

The null-steering algorithm described hereinabove can be used for determining the direction of arrival of interfering signals when the system is properly calibrated and the geometry of the antenna array is known. More specifically, by neglecting the impact of the GNSS signal (that is below the noise floor) it is possible to relate the complex weigths w[n] to the angle (direction) of arrival of the interfering signal.

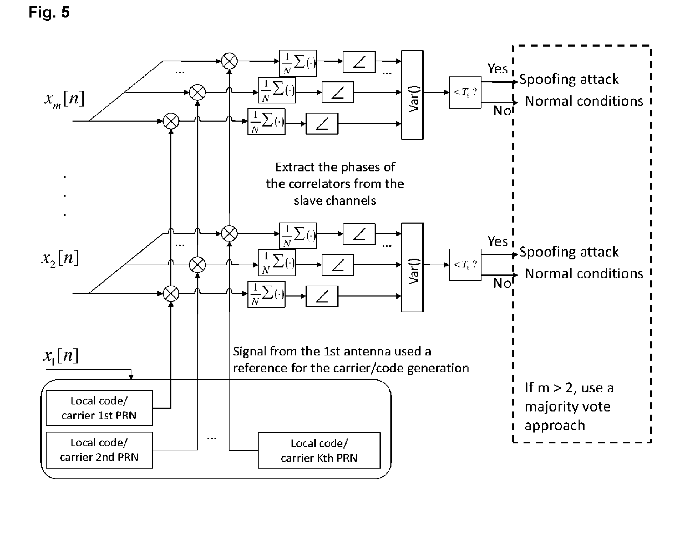

The proposed architecture can also be used for detection of GNSS spoofing attacks. This is preferably achieved by considering the spatial signature of the received GNSS signals. The antenna-specific data streams outputted by the switch antenna system can be processed as in Fig. 5. The signal from the first antenna is used for tracking purposes. The signals from the other antennas are passively tracked (i.e. they are not used for estimating the signal parameters) and used for spoofing detection. One (in the illustrated case, the first) antenna is used as a reference for the generation of local codes/carriers relative to the different satellites in view. The samples from the slave channels (from the other antennas) are used for the computation of complex correlators, the phase of which is analyzed for spoofing detection. More specifically, if the variance of the correlators from a slave channel is lower than a decision threshold, $T_h$, then a spoofing attack is declared. If the number of antennas is greater than 2, a majority vote approach is adopted.

While specific embodiments have been described in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

**Claims**

1. A GNSS receiver, comprising
   an antenna array including at least two antennas for receiving a GNSS signal at different positions and for producing respective signals having relative phases that depend on the direction of arrival of said GNSS signal;
   a multiplexer switch connected to said antennas controlled so as to cyclically select the signals produced by said antennas one at a time and to multiplex samples of the signals produced by said antennas in a time-multiplexed signal;
   a control signal generator connected to said multiplexer switch for providing said multiplexer switch with a control signal;
   a front end connected to said multiplexer switch for receiving said time-multiplexed signal;
   **characterized in that** said multiplexer switch is configured for switching from one signal produced by said antennas to the next at a switching frequency amounting to at least m · 2 MHz, where m is the number of antennas of said antenna array; **in that** said front end is configured for converting said time-multiplexed signal into a digital stream with interleaved samples from the different antennas;
   **in that** said GNSS receiver comprises a digital signal processor connected to said front end so as to receive said digital stream as an input, said digital signal processor being configured to de-interleave said digital stream and to process said samples from the different antennas as antenna-specific streams.

2. The GNSS receiver as claimed in claim 1, wherein said multiplexer switch is an RF switch and said antennas are directly connected to said RF switch.

3. The GNSS receiver as claimed in claim 1, wherein said multiplexer switch is an IF switch and said antennas are connected to said IF switch via a respective down-converter, configured for transposing the signals produced by said antennas to an intermediate frequency.

4. The GNSS receiver as claimed in any one of claims 1 to 3, wherein said digital signal processor is configured for carrying out pre-correlation null-steering.

5. The GNSS receiver as claimed in claim 4, wherein said digital signal processor is configured for carrying out pre-correlation null-steering by minimizing the energy of a composite signal defined by the formula:

$$y[n] = \sum_{i=1}^{m} w_i^* x_i[n]$$

where

n is the sample number,

m is the number of antennas of the antenna array y[n] is the composite waveform for the n-th sample n,

$x_i[n]$, i=1... m, are the n-th samples from antennas i...m, respectively, and

$w_i$, i=1... m, is complex weights, calculated in such a way that the energy of said composite signal is minimised.

6. The GNSS receiver as claimed in claim 5, wherein said digital signal processor is configured to derive a direction of arrival of an interfering signal from said complex weights and the geometrical configuration of said antenna array.

7. The GNSS receiver as claimed in claim 6, wherein said digital signal processor is further configured to separately correlate antenna-specific streams with a local code replica and a local carrier replica and to detect a GNSS spoofing signal based upon the correlation results thereby obtained.

8. The GNSS receiver as claimed in any one of claims 1 to 7, wherein said front end is configured to carry out I/Q sampling.

9. The GNSS receiver as claimed in any one of claims 1 to 7, wherein said front end is configured for carrying out real sampling and wherein the switching frequency amounts to at least m · 4 MHz.

**Fig. 1**

**Fig. 2**

Fig. 3

**Fig. 4**

**Fig. 5**

**EP 2 589 983 A1**

Europäisches Patentamt

European Patent Office

Office européen des brevets

# EUROPEAN SEARCH REPORT

Application Number

EP 11 18 8083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/227905 A1 (KUNYSZ WALDEMAR [CA] ET AL) 12 October 2006 (2006-10-12) * paragraphs [0063] - [0071]; figures 7-9 * | 1-9 | INV. G01S19/21 G01S19/36 |
| A | WO 2011/007238 A2 (TOPCON GPS LLC [US]; ZHODZISHSKY MARK [RU]; VEITSEL VICTOR [RU]; VEITS) 20 January 2011 (2011-01-20) * abstract; figures 1a-7c * * paragraph [0026] - paragraph [0115] * | 1-9 | |
| A | US 6 069 583 A (SILVESTRIN PIERLUIGI [NL] ET AL) 30 May 2000 (2000-05-30) * abstract; figures 1-6a * * columns 6-11 * | 1 | |
| A,D | M. LI ET AL.: "A GNSS software receiver beamforming architecture", INTERNATIONAL SYMPOSIUM ON GPS/GNSS, 25 November 2008 (2008-11-25), pages 904-909, XP002671809, Yokohama, Japan * the whole document * | 1 | |
| A,D | US 5 268 695 A (DENTINGER MICHAEL P [US] ET AL) 7 December 1993 (1993-12-07) * abstract; figures 1,2 * * columns 2-4 * | 1 | TECHNICAL FIELDS SEARCHED (IPC) G01S |
| A | US 5 497 161 A (TSUI DAVID C [US]) 5 March 1996 (1996-03-05) * columns 3-5; figure 3 * | 1 | |
| A | WO 00/26688 A1 (KONINKL PHILIPS ELECTRONICS NV [NL]) 11 May 2000 (2000-05-11) * the whole document * | 1 | |

The present search report has been drawn up for all claims

| Place of search | Date of completion of the search | Examiner |
|---|---|---|
| The Hague | 20 March 2012 | Esbri, Oriol |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

**EP 2 589 983 A1**

## ANNEX TO THE EUROPEAN SEARCH REPORT
## ON EUROPEAN PATENT APPLICATION NO.

EP 11 18 8083

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2012

| Patent document cited in search report | | Publication date | Patent family member(s) | | Publication date |
|---|---|---|---|---|---|
| US 2006227905 | A1 | 12-10-2006 | CA | 2542702 A1 | 12-10-2006 |
| | | | US | 2006227905 A1 | 12-10-2006 |
| WO 2011007238 | A2 | 20-01-2011 | CA | 2767879 A1 | 20-01-2011 |
| | | | US | 2011012783 A1 | 20-01-2011 |
| | | | WO | 2011007238 A2 | 20-01-2011 |
| US 6069583 | A | 30-05-2000 | NONE | | |
| US 5268695 | A | 07-12-1993 | DE | 69315171 D1 | 18-12-1997 |
| | | | DE | 69315171 T2 | 10-06-1998 |
| | | | EP | 0591835 A1 | 13-04-1994 |
| | | | JP | 2889796 B2 | 10-05-1999 |
| | | | JP | 7311252 A | 28-11-1995 |
| | | | US | 5268695 A | 07-12-1993 |
| US 5497161 | A | 05-03-1996 | NONE | | |
| WO 0026688 | A1 | 11-05-2000 | CN | 1292093 A | 18-04-2001 |
| | | | EP | 1046054 A1 | 25-10-2000 |
| | | | JP | 2002529942 A | 10-09-2002 |
| | | | US | 6271791 B1 | 07-08-2001 |
| | | | WO | 0026688 A1 | 11-05-2000 |

EPO FORM P0459

For more details about this annex : see Official Journal of the European Patent Office, No. 12/82

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5268695 A

- US 5557284 A

**Non-patent literature cited in the description**

- **P. Y. MONTGOMERY et al.** A Multi-Antenna Defense - Receiver-Autonomous GPS Spoofing Detection. *Inside GNSS,* March 2009, 40-46
- **M. LI et al.** A GNSS software receiver beamforming architecture. *International Symposium on GPS/GNSS, Tokyo, Japan,* 25 November 2008, 904-909
- Wiley Series in Microwave and Optical Engineering. **JAMES BAO-YEN TSUI.** Fundamentals of Global Positioning System Receivers: A Software Approach. Wiley-Interscience, 03 December 2004
- **H. WEN ; P. Y.-R. HUAN ; J. DYER ; A. ARCHINAL ; J. FAGAN.** Countermeasures for gps signal spoofing. *Proc. of the ION GNSS'05,* September 2005, 1285-1290
- **P. Y. MONTGOMERY ; T. E. HUMPHREYS ; B. M. LEDVINA.** Receiver-autonomous spoofing detection: Experimental results of a multi-antenna receiver defense against a portable civil GPS spoofer. *Proc. of ION ITM,* January 2009, 124-130

- **P. Y. MONTGOMERY ; T. E. HUMPHREYS ; B. M. LEDVINA.** A multi-antenna defense. receiver-autonomous gps spoofing detection. *Inside GNSS,* March 2009, vol. 4 (2), 40-46
- **B. MOTELLA ; M. PINI ; M., FANTINO ; P. MULASSANO ; M. NICOLA ; J. FORTUNY-GUASCH ; M. WILDEMEERSCH ; D. SYMEONIDIS.** Performance assessment of low cost GPS receivers under civilian spoofing attacks. *Proc. of the 5th ESA Workshop on Satellite Navigation Technologies and European Workshop on GNSS Signals and Signal Processing (NAVITEC,* December 2010, 1-8
- **M. LI ; F. WANG ; A. T. BALAEI ; A. DEMPSTER ; C. RIZOS.** A GNSS software receiver beamforming architecture. *Proc. of International Symposium on GPS/GNSS,* November 2008, 904-909